# EUROPEAN PATENT APPLICATION

(11) **EP 4 769 177 A1**
(43) Date of publication of application: **01.07.2026**
(21) Application number: 25772347.8
(22) Date of filing: 26.02.2025
(51) Int. Cl.: G06F 16/3329, G06F 16/332, G06F 16/338, G06F 40/263, G06F 9/451, G06F 8/33, G06F 8/38, G06F 8/36, G06N 3/0475, G06N 3/08

(54) **ELECTRONIC DEVICE, AND ELECTRONIC DEVICE CONTROL METHOD**

(30) Priority: 13.03.2024 KR 20240035017
(71) Applicant: Samsung Electronics Co., Ltd, Suwon-si, Gyeonggi-do 16677 (KR)
(72) Inventor: LEE, Giwon, Suwon-si, Gyeonggi-do 16677 (KR); KIM, Jooman, Suwon-si, Gyeonggi-do 16677 (KR); HONG, Sunghyun, Suwon-si, Gyeonggi-do 16677 (KR); NAM, Seungho, Suwon-si, Gyeonggi-do 16677 (KR)
(74) Representative: Gulde & Partner
(86) International application number: PCT/KR2025/002712
(87) International publication number: WO 2025/192908

(57) **Abstract**

An electronic device and a controlling method of an electronic device are disclosed. The electronic device includes: a memory storing at least one instruction and at least one processor, comprising processing circuitry, individually and/or collectively, configured to execute at least one instruction, and to: input, based on a code written in a programming language being obtained, the code in a neural network model, and obtain a plurality of intermediate answers describing at least a portion of the code in a natural language, provide the plurality of intermediate answers, and input, based on an input selecting one intermediate answer from among the plurality of intermediate answers being received, information on the selected intermediate answer in the neural network model, and obtain a final answer describing the code in the natural language.

## Description

### [Technical Field]

The disclosure relates to an electronic device and a method of controlling the electronic device, and for example, to an electronic device that can provide a description for an input code and a controlling method thereof.

### [Background Art]

With recent developments in the fields of artificial intelligence and big data, the fields associated with programming has been developing steadily. However, when a user (developer) typically documents a code written by a programming language, content of the document is poorly written, in many cases, due to reasons such as there being a lack of time to write or review a description for the content of the code.

In addition, the user frequently takes into reference or uses not only a code written by himself or herself but also a code written by other persons, but if the description for the code is not written suitably, much time may be spent in understanding the code. In addition, if the user modifies the code, it is necessary to modify the description of the code according to the modified code, but such modification is not carried out in many cases.

Although a neural network model trained to provide a description for an input code is being provided recently, because an object for using the code by the user, a level of understanding for a programming language by the user, preference of the user, and the like may be quite varied, limitations have been pointed out that providing a description for a code to match preferences of each of the individual users may be difficult with just the technology developed until now.

### [Disclosure]

### [Technical Solution]

The disclosure addresses the problems and/or disadvantages of the related art as described above, and Embodiments of the disclosure is to provide an electronic device that can reflect a preference of a user when providing an answer describing an input code and a controlling method thereof.

According to various example embodiments of the disclosure, the electronic device includes: a memory storing at least one instruction and at least one processor, comprising processing circuitry, individually and/or collectively, configured to execute at least one instruction, and to control the electronic device to: input, based on a code written in a programming language being obtained, the code in a neural network model, and obtain a plurality of intermediate answers describing at least a portion of the code in a natural language, provide the plurality of intermediate answers, and input, based on an input selecting one intermediate answer from among the plurality of intermediate answers being received, information on the selected intermediate answer in the neural network model, and obtain a final answer describing the code in the natural language.

At least one processor, individually and/or collectively, may be configured to obtain, based on a natural language input for obtaining a code for performing a specific work being received, the code by inputting the natural language input in the neural network model.

At least one processor, individually and/or collectively, may be configured to: obtain information on a preference of a user based on information on the selected intermediate answer, and store the information on the preference of the user in the memory, and the information on the preference may include at least one among information on a plurality of preferred answers selected by the user, information on a sentence length of an answer preferred by the user, information on a form preferred by the user, and information on an answer style preferred by the user.

At least one processor, individually and/or collectively, may be configured to: update, based on the user input being received, the information on the preference for the selected intermediate answer to be included in the information on the plurality of preferred answers.

At least one processor, individually and/or collectively, may be configured to: determine, based on a similarity between the plurality of intermediate answers and the plurality of preferred answers, a priority order of the plurality of intermediate answers, identify at least one intermediate answer to be provided to the user from among the plurality of intermediate answers based on the determined priority order, and provide the identified at least one intermediate answer and information on the priority order.

At least one processor, individually and/or collectively, may be configured to train the neural network model based on the information on the preference.

At least one processor, individually and/or collectively, may be configured to: obtain, based on the code being obtained, a prompt corresponding to the preference of the user based on the information on the preference, and obtain, by inputting the code and the prompt in the neural network model, the plurality of intermediate answers and the final answer.

At least one processor, individually and/or collectively, may be configured to: identify, based on the code being obtained, the programming language of the code, and obtain the prompt based on information corresponding to the identified programming language from among the information on the preference.

According to various example embodiments of the disclosure\, a method of controlling an electronic device includes: obtaining a code written in a programming language, obtaining, by inputting the code in a neural network model, a plurality of intermediate answers describing at least a portion of the code in a natural language, providing the plurality of intermediate answers, and inputting, based on an input selecting one intermediate answer from among the plurality of intermediate answers being received, information on the selected intermediate answer in the neural network model, and obtaining a final answer describing the code in the natural language.

The method of controlling the electronic device may include receiving a natural language input for obtaining a code for performing a specific work, and obtaining the code by inputting the natural language input in the neural network model.

The method of controlling the electronic device may further include: obtaining information on a preference of a user based on information on the selected intermediate answer, and storing the information on the preference of the user in a memory, and the information on the preference may include at least one from among information on a plurality of preferred answers selected by the user, information on a sentence length of an answer preferred by the user, information on a form preferred by the user, and information on an answer style preferred by the user.

The method of controlling the electronic device may further include updating, based on the user input being received, the information on the preference for the selected intermediate answer to be included in information on the plurality of preferred answers.

The method of controlling the electronic device may further include: determining, based on a similarity between the plurality of intermediate answers and the plurality of preferred answers, a priority order of the plurality of intermediate answers, identifying at least one intermediate answer to be provided to the user from among the plurality of intermediate answers based on the determined priority order, and providing the identified at least one intermediate answer and information on the priority order.

The method of controlling the electronic device may further include training the neural network model based on the information on the preference.

The method of controlling the electronic device may further include: obtaining, based on the code being obtained, a prompt corresponding to the preference of the user based on the information on the preference, and obtaining, by inputting the code and the prompt in the neural network model, the plurality of intermediate answers and the final answer.

The obtaining the prompt may further include identifying, based on the code being obtained, the programming language of the code and obtaining the prompt based on information corresponding to the identified programming language from among the information on the preference.

A non-transitory computer-readable storage medium having stored thereon a program which, when executed by at least one processor, comprising processing circuitry, of an electronic device, individually and/or collectively, causes the electronic device to perform a method of controlling the electronic device, the method of controlling the electronic device comprising: obtaining a code written in a programming language, obtaining, by inputting the code in a neural network model, a plurality of intermediate answers describing at least a portion of the code in a natural language, providing the plurality of intermediate answers, and inputting, based on an input selecting one intermediate answer from among the plurality of intermediate answers being received, information on the selected intermediate answer in the neural network model, and obtaining a final answer describing the code in the natural language.

### [Description of Drawings]

The above and other aspects, features, and advantages of certain embodiments of the present disclosure will be more apparent from the following detailed description, taken in conjunction with the accompanying drawings, in which:
FIG. 1 is a block diagram illustrating an example configuration of an electronic device according to various embodiments;
FIG. 2 is a block diagram illustrating an example configuration of a neural network model and a plurality of modules according to various embodiments;
FIG. 3 is a diagram illustrating an example user interface that includes a code and an intermediate answer according to various embodiments;
FIG. 4 is a diagram illustrating an example of determining a priority order of a plurality of intermediate answers according to various embodiments;
FIG. 5 is a diagram illustrating an example of obtaining a plurality of intermediate answers and a final answer by inputting a prompt together with a code in a neural network model according to various embodiments;
FIG. 6 is a diagram illustrating an example prompt according to various embodiments;
FIG. 7 is a diagram illustrating an example of training of a neural network model according to various embodiments;
FIG. 8 is a block diagram illustrating an example configuration of an electronic device according to various embodiments; and
FIG. 9 is a flowchart illustrating an example method controlling of an electronic device according to various embodiments.

### [Mode for Invention]

Various modifications may be made to the various example embodiments of the disclosure. Accordingly, example embodiments will be illustrated in drawings, and described in greater detail in the description. However, it should be noted that the various embodiments are not intended to limit the scope of the disclosure, but the disclosure should be interpreted to include all modifications, equivalents or alternatives of the various example embodiments included in the ideas and the technical scope disclosed herein. With respect to the description of the drawings, like reference numerals may be used to indicate like elements.

In describing the disclosure, in case it is determined that the detailed description of related known technologies may unnecessarily confuse the gist of the disclosure, the detailed description thereof will be omitted.

The example embodiments below may be modified to various different forms, and it is to be understood that the scope of the technical spirit of the disclosure is not limited to the example embodiments below. Rather, the example embodiments are provided so that the disclosure will be thorough and complete, and to fully convey the technical spirit of the disclosure to those skilled in the art.

Terms used in the disclosure have been merely used to describe example embodiments, and are not intended to limit the scope of protection. A singular expression includes a plural expression, unless otherwise specified.

In the disclosure, expressions such as "have", "may have", "include", and "may include" are used to designate a presence of a corresponding characteristic (e.g., elements such as numerical value, function, operation, or component), and not to preclude a presence or a possibility of additional characteristics.

In the disclosure, expressions such as "A or B", "at least one of A and/or B", or "one or more of A and/or B" may include all possible combinations of the items listed together. For example, "A or B", "at least one of A and B", or "at least one of A or B" may refer to all cases including (1) at least one A, (2) at least one B, or (3) both of at least one A and at least one B.

Expressions such as "1st", "2nd", "first" or "second" used in the disclosure may limit various elements regardless of order and/or importance, and may be used merely to distinguish one element from another element and not limit the relevant element.

When a certain element (e.g., a first element) is indicated as being "(operatively or communicatively) coupled with/to" or "connected to" another element (e.g., a second element), it may be understood as the certain element being directly coupled with/to the another element or as being coupled through other element (e.g., a third element).

When an element (e.g., first element) is indicated as "directly coupled with/to" or "directly connected to" another element (e.g., second element), it may be understood as the other element (e.g., third element) not being present between the certain element and the another element.

The expression "configured to... (or set up to)" used in the disclosure may be used interchangeably with, for example, "suitable for...," "having the capacity to...," "designed to...," "adapted to...," "made to...," or "capable of..." based on circumstance. The term "configured to... (or set up to)" may not necessarily refer to "specifically designed to" in terms of hardware.

In a certain circumstance, the expression "a device configured to..." may refer, for example, to something that the device "may perform..." together with another device or components. For example, a phrase "a processor configured to (or set up to) perform A, B, or C" may refer, for example, to a dedicated processor for performing a relevant operation (e.g., embedded processor), or a generic-purpose processor (e.g., a central processing unit (CPU) or an application processor) capable of performing the relevant operations by executing one or more software programs stored in a memory device.

The term 'module' or 'part' used in the various example embodiments herein perform at least one function or operation, and may be implemented with a hardware or software, or implemented with a combination of hardware and software. In addition, a plurality of 'modules' or a plurality of 'parts', except for a 'module' or a 'part' which needs to be implemented with a specific hardware, may be integrated in at least one module and implemented as at least one processor.

The various elements and areas of the drawings have been schematically illustrated. Accordingly, the technical spirit of the disclosure is not limited by relative sizes and distances illustrated in the accompanied drawings.

Various example embodiments of the disclosure will be described in greater detail below with reference to the accompanying drawings to aid in the understanding of a person of ordinary skill in the art to which the disclosure pertains.

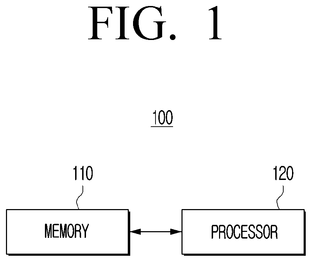

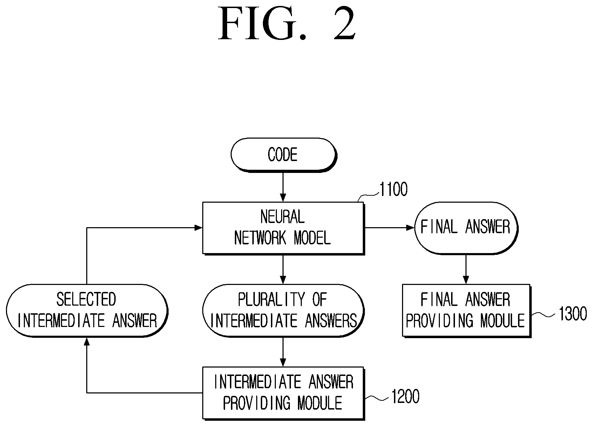

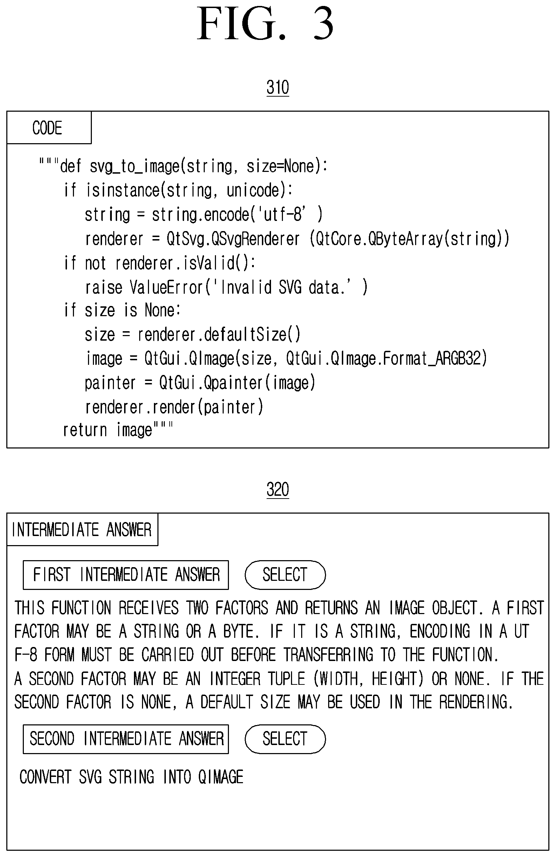

FIG. 1 is a block diagram illustrating an example configuration of an electronic device 100 according to various embodiments. FIG. 2 is a block diagram illustrating a neural network model 1100 and a plurality of modules according to various embodiments. Further, FIG. 3 is a diagram illustrating a user interface including a code and an intermediate answer according to various embodiments.

The electronic device 100 according to the disclosure may refer to a device that can provide a description for the code. For example, the electronic device 100 may provide an answer describing the code using the neural network model 1100, and reflect a preference of a user in the provided answer. For example, the electronic device 100 may be implemented as a device designated as a server, a cloud server, and the like. However, there is no particular limitation to the type of the electronic device 100.

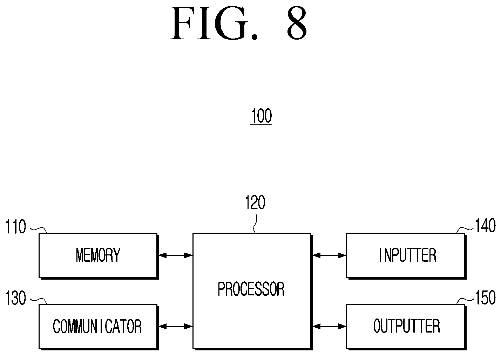

As shown in FIG. 1, the electronic device 100 may include a memory 110 and a processor (e.g., including processing circuitry) 120. However, because various configurations in addition thereto may be included in the electronic device 100, a more detailed example configuration of the electronic device 100 will be described in greater detail with reference to FIG. 8.

In the memory 110, at least one instruction associated with the electronic device 100 may be stored. Further, an operating system (O/S) for driving the electronic device 100 may be stored in the memory 110. In addition, various software programs or applications for the electronic device 10 to operate according to various embodiments of the disclosure may be stored in the memory 110. Further, the memory 110 may include a semiconductor memory such as a flash memory, a magnetic storage medium such as a hard disk, or the like.

For example, various software modules for the electronic device 100 to operate according to various embodiments of the disclosure may be stored in the memory 110, and the processor 120 may control an operation of the electronic device 100 by executing various software modules stored in the memory 110. That is, the memory 110 may be accessed by the processor 120, and reading, writing, modifying, deleting, updating, and the like of data may be performed by the processor 120.

The term 'memory 110' in the disclosure may be used as a meaning that includes the memory 110, a read only memory (ROM) in the processor 120, a random access memory (RAM), or a memory card (e.g., a micro SD card, a memory stick) mounted in the electronic device 100.

For example, according to various embodiments, various information such as, for example, and without limitation, information on the neural network model 1100, information on a plurality of modules, information on an input code, information on an intermediate answer, information on a final answer, information on a preference of a user, information on a prompt, and the like may be stored in the memory 110. In addition thereto, various information necessary within the range for achieving the object of the disclosure may be stored in the memory 110, and the information stored in the memory 110 may be received from an external device or updated based on being input by the user.

The processor 120 may include various processing circuitry and control the overall operation of the electronic device 100. For example, the processor 120 may be connected with a configuration of the electronic device 100 which includes the memory 110, and control the overall operation of the electronic device 100 by executing the at least one instruction stored in the memory 110 as described above.

The processor 120 may be implemented in various ways. For example, the processor 120 may be implemented as at least one from among an application specific integrated circuit (ASIC), an embedded processor, a microprocessor, a hardware control logic, a hardware finite state machine (FSM), and a digital signal processor (DSP). The term processor 120 in the disclosure may be used as a meaning that includes a central processing unit (CPU), a graphic processing unit (GPU), a micro processing unit (MPU), and the like. The processor 120 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

For example, according to various embodiments, the processor 120 may provide an answer describing the input code using the neural network model 1100, and reflect the preference of the user to the provided answer. Specifically, as shown in FIG. 2, the processor 120 may implement various embodiments of the disclosure using the neural network model 1100 and the plurality of modules. Further, the plurality of modules may include an intermediate answer providing module 1200 and a final answer providing module 1300.

The processor 120 may obtain a code written in a programming language. The 'code' may refer to a set of instructions written in the programming language. For example, the code may include a set of instructions described in the programming language with which a human can interpret a computer program, and the term 'code' may be substituted with terms such as a 'source code', a 'program code', a 'code script', or the like.

The 'programming language' may refer to a language used in the writing of the code. For example, the programming language may refer to a form of a language designed based on a pre-defined grammar and rules for interaction between humans and computers. In an example, 310 of FIG. 3 shows an example of a code written in a programming language known as 'Python', but there is no particular limitation to a type of a programming language, a length of a code, and the like according to the disclosure.

The processor 120 may obtain a code based on inputting a code written by the user, or obtain a code by receiving information on a code from the external device.

The processor 120 may generate a code using the neural network model 1100. For example, based on a natural language input of the user for obtaining a code for performing a specific work being received, the processor 120 may obtain a code by inputting the natural language input in the neural network model 1100. For example, if a natural language input of 'create a calculator program performing four fundamental arithmetic operations with Phython' is input in the neural network model 1100, the neural network model 1100 may obtain a code for implementing the calculator program with the programming language known as 'Python', and provide the obtained code to the user.

The processor 120 may input the obtained code in the neural network model 1100, and obtain a plurality of intermediate answers describing at least a portion of the obtained code in the natural language. The 'neural network model 1100' may obtain an answer describing the input code in the natural language. For example, the neural network model 1100 may sequentially analyze instructions of the input code, and output an answer describing the analyzed content in the natural language. The type of programming language that the neural network model 1100 can analyze may be variously determined based on training data for training of the neural network model 1100.

As described above, the neural network model 1100 may include a 'code describing model' that obtains an answer describing the input code in the natural language, and may be a model integrated with the code describing model and a 'code generating model' that generates a code corresponding to the natural language input.

The neural network model 1100 may include a 'language model (LM)' which can generate a word or a sentence by performing natural language processing for not only codes but also texts of various types. In addition, the neural network model 1100 may be implemented as a 'large language model (LLM)' which trained with a large amount of parameters and a wide range of contexts based on a large amount of training data or a 'generative artificial intelligence (generative AI)' which creatively generates new content or information based on the given text. In addition thereto, there is no particular limitation to a type of the neural network model 1100 according to the disclosure.

The 'answer' output by the neural network model 1100 may be an answer of the neural network model 1100 for the input code, and may refer to a text describing the input code in the natural language. The term answer may be substituted with terms such as a 'description', 'explanatory text', 'document', 'output', or 'result', and a substitutability of the terms above may also be applied to terms such as an intermediate answer and a final answer.

The answer output by the neural network model 1100 may include the intermediate answer and the final answer. the 'intermediate answer' may refer to an answer that describes at least a portion of the input code in the natural language. For example, the intermediate answer may be an answer that is temporarily derived in a process of analyzing the content of the input code by the neural network model 1100, and may be provided to the user in real-time. In other words, the intermediate answer may be streamed to the user in a process of generating the final answer for the content of the input code. The term intermediate answer may be substituted with terms such as a 'candidate answer' or a 'temporary answer'.

The neural network model 1100 may obtain, at every pre-set time intervals or every time a sentence is completed, a plurality of intermediate answers by showing an analysis result of the code generated until then in the natural language.

For example, the neural network model 1100 may sequentially analyze instructions of the input code and output a result in token units. The neural network model 1100 may output the tokens which were obtained at every pre-set time intervals (e.g., 3 seconds) until then as each of the intermediate answers. In another example, the neural network model 1100 may add a punctuation mark (e.g., \n) indicating a line break when a sentence is completed due to the obtained tokens being accumulated, and output the tokens that are generated until the punctuation mark indicating the line break is added as each of the intermediate results. A process of outputting the result in token units and a process of outputting the intermediate result may continue until a token (e.g., <end>) indicating that the generation of the answer is completed is obtained.

The types of each of the plurality of intermediate answers may be varied from one another. For example, the sentence length, the form, the style, and the like of each of the plurality of intermediate answers may vary from one another. For example, the plurality of intermediate answers may be a 'long sentence' including a sentence of greater than or equal to a threshold length or a 'short sentence' including a sentence which is less than or equal to the threshold length. The plurality of intermediate answers may be an answer written according to a pre-defined form or an answer not limited to a form. The style of the plurality of intermediate answers according to the training data used in the training of the neural network model 1100 may also vary. In addition to the above-described example, elements that can determine a type of the intermediate answer may also be varied.

As an example, in 320 of FIG. 3, a user interface indicating the plurality of intermediate answers for the code of 310 in FIG. 3 is shown. A first intermediate answer may indicate an intermediate answer of a 'long sentence' type including a sentence that is greater than or equal to the threshold length, and a second intermediate answer may indicate an intermediate answer of a 'short sentence' type including a sentence that is less than or equal to the threshold length.

Each of the plurality of intermediate answers may be two or more intermediate answers for one instruction included in the code, and may be two or more intermediate answers for different instructions included in the code. Although it will be described below as a 'plurality of' intermediate answers being provided to clearly describe that the selection of the user for the intermediate answer is to be carried out, 'one' intermediate answer may be provided according to an embodiment.

The processor 120 may provide the obtained plurality of intermediate answers. For example, the processor 120 may input, based on a plurality of intermediate answers being obtained through the neural network model 1100, the plurality of intermediate answers in the intermediate answer providing module 1200, and provide the plurality of intermediate answers. The processor 120 may provide, every time the each of the plurality of intermediate answers is obtained through the neural network model 1100, the obtained intermediate answer to the user. For example, the processor 120 may provide the plurality of intermediate answers to the user through a display of the electronic device 100, and provide the plurality of intermediate answers to the user by transmitting information on the plurality of intermediate answers to an external device (e.g., a terminal device of the user, etc.).

The processor 120 may receive an input (e.g., a user input) selecting one intermediate answer from among the plurality of intermediate answers. For example, the intermediate answer providing module 1200 may receive the user input selecting one intermediate answer from among the plurality of intermediate answers, and provide information on the intermediate answer selected by the user to the neural network model 1100.

If the plurality of intermediate answers is provided to the user through the display of the electronic device 100, the processor 120 may receive the user input selecting one intermediate answer from among the plurality of intermediate answers by the electronic device 100. For example, if the plurality of intermediate answers is provided as shown in 320 of FIG. 3, the user may select the first intermediate answer by touching a 'select' icon at an upper end from among 320 in FIG. 3, and select the second intermediate answer by touching the 'select' icon at a lower end from among 320 in FIG. 3.

If the plurality of intermediate answers is provided to the user through the external device, the processor 120 may obtain information on the intermediate answer selected by the user by receiving the user input selecting one intermediate answer from among the plurality of intermediate answers from the external device.

When the user input is received, the processor 120 may input information on the selected intermediate answer in the neural network model 1100, and obtain the final answer describing the code in the natural language. For example, when information on the selected intermediate answer is obtained through the intermediate answer providing module 1200, the processor 120 may input the information on the selected intermediate answer in the neural network model 1100. Further, the neural network model 1100 may use the information on the intermediate answer selected by the user together with the input code, and obtain the final answer describing the code in the natural language. The term 'obtaining (or acquiring)' of the intermediate answer or the final answer may be substituted with terms such as 'generating' or 'outputting'.

The 'final answer' may refer to an answer describing the input code in the natural language. For example, while the intermediate answer is an answer that describes at least a portion of the input code in the natural language, the final answer may be an answer that describes the whole of the code in the natural language. In addition, while the intermediate answer may be an answer that is obtained prior to the user input selecting one intermediate answer from among the plurality of intermediate answers is received, the final answer may be an answer that is obtained after the user input selecting one intermediate answer from among the plurality of intermediate answers is received.

Because the final answer is an answer that is obtained after the user input selecting one intermediate answer from among the plurality of intermediate answers is received, the neural network model 1100 may obtain the final answer corresponding to the type of the selected intermediate answer. In other words, the neural network model 1100 may obtain the final answer corresponding to at least one from among the sentence length, the form, and the style of the selected intermediate answer.

For example, if the selected intermediate answer is a long sentence including a sentence that is greater than or equal to the threshold length, the processor 120 may obtain the final answer comprising the long sentence through the neural network model 1100. If the selected intermediate answer is a short sentence including a sentence of less than or equal to the threshold length, the processor 120 may obtain the final answer including the short sentence through the neural network model 1100.

In another example, if the selected intermediate answer is an answer written according to a pre-defined form (e.g., a technical document form), the processor 120 may obtain the final answer written according to the pre-defined form through the neural network model 1100. If the selected intermediate answer is an answer that is not limited to the pre-defined form, the processor 120 may obtain the final answer that is not limited to the pre-defined form through the neural network model 1100.

If the user input is not received, the processor 120 may obtain the final answer describing the code in the natural language through the neural network model 1100. For example, if the user input is not received within a pre-set threshold time, the neural network model 1100 may obtain the final answer describing the code in the natural language based on the input code without additional input. In this case, a portion from among the plurality of intermediate answers may be included in the final answer.

The processor 120 may store the obtained final answer in the memory 110, and also provide the obtained final answer. For example, if the plurality of intermediate answers is obtained through the neural network model 1100, the processor 120 may provide the final answer by inputting the final answer in the final answer providing module 1300. For example, the processor 120 may provide the final answer to the user through the display of the electronic device 100, and provide the intermediate answer to the user through a speaker of the electronic device 100. In addition, the processor 120 may provide the final answer to the user by controlling a communicator 130 to transmit information on the final answer to the external device.

Because the sentence length, the form, the style, and the like of each of the plurality of intermediate answers can vary from one another, the user input selecting one intermediate answer from among the plurality of intermediate answers may indicate a preference of the user for the type of the intermediate answer. Further, if the user input selecting one intermediate answer from among the plurality of intermediate answers is received, the processor 120 may obtain information on the preference of the user based on information on the selected intermediate answer. Further, the processor 120 may store the obtained information on the preference of the user in the memory 110.

The term 'information on preference' is a collective term for information that indicates the preference of the user for a type of the final answer, and may be substituted with shortened terms such as 'preference information' and 'preferred answer information'.

For example, the information on preference may include at least one from among information on a plurality of preferred answers selected by the user, information on a sentence length of an answer preferred by the user, information on a form preferred by the user, and information on an answer style preferred by the user. The information on preference may refer, for example, to the intermediate answer selected by the user itself.

In addition, because the preference for a type of answer by the user can vary according to the programming language, the information on preference may be classified by a type of programming language. In addition thereto, the information on preference may include various information which can vary according to a level of understanding by the user on a relevant programming language, a purpose of use by the user for the code, and the like.

The information on preference may be obtained based on the user input selecting one intermediate answer from among the plurality of intermediate answers. That is, the information on preference may include information corresponding to the intermediate answer selected by the user.

In addition, the information on preference may be updated based on the user input selecting one intermediate answer from among the plurality of intermediate answers, and may be set based on a user input selecting at least one from among a plurality of types that classify the information on preference.

The processor 120 may obtain or update at least a portion from among the information on the user preference by providing a user interface for inputting the information on the user preference.

Although it is simply referred to as the information on the user preference in the description of the disclosure, but the information on the user preference may not only be information on a preference of one user, but also information on a preference of a plurality of users (e.g., a team or a group).

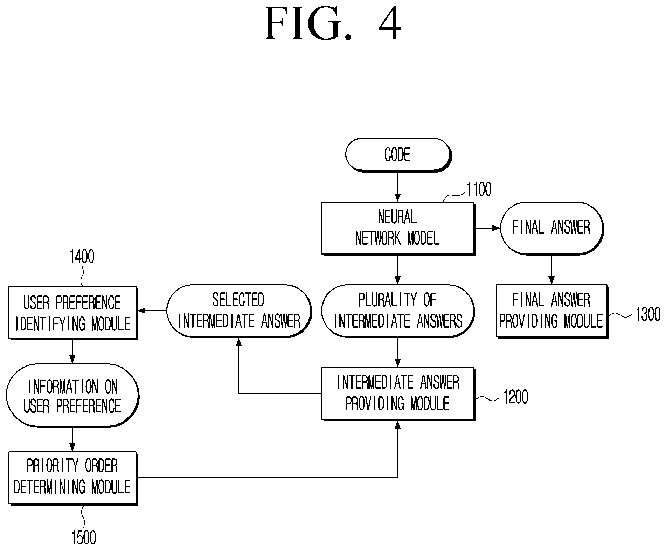

Further, because the information on preference can be used in determining a priority order of the plurality of intermediate answers, obtaining a prompt, training of the neural network model 1100, and the like, various embodiments associated therewith will be described in greater detail below with reference to FIGS. 4, 5, 6 and 7.

According to various embodiments described above with reference to FIG. 1 above, the electronic device 100 may provide the plurality of intermediate answers with respect to obtaining an answer describing a programming code in the natural language using the neural network model 1100, and obtain the final answer by reflecting the preference of the user for the plurality of intermediate answers.

Accordingly, the user may use the final answer reflected with his or her preference, and effectively and efficiently grasp the content of the code written by the user himself or herself or written by another person. For example, if the user only viewed a brief description and preferred searching for a necessary code from among the various codes, the user may grasp the content of the code using the final answer provided in the short sentence. Conversely, if the user viewed a detailed description and preferred searching for a necessary code from among the various codes, the user may grasp the content of the code using the final answer provided in the long sentence.

FIG. 4 is a diagram illustrating an example of determining a priority order of a plurality of intermediate answers according to various embodiments.

As described above, the information on preference may be used in determining the priority order of the plurality of intermediate answers. As shown in FIG. 4, to determine the priority order of the plurality of intermediate answers, the plurality of modules may further include not only the intermediate answer providing module 1200 and the final answer providing module 1300, but also a user preference identifying module 1400 and a priority order determining module 1500. Each of these modules may include various circuitry and/or executable program instructions executable by the various circuitry.

The 'user preference identifying module 1400' may refer to a module (e.g., including various circuitry and/or executable program instructions) that identifies the preference of the user for the final answer. For example, the user preference identifying module 1400 may identify the preference of the user for the final answer based on the user input selecting one intermediate answer from among the plurality of intermediate answers, and obtain the information on the user preference. In addition, the user preference identifying module 1400 may update, based on an additional user input being received, the information on the user preference based on the additional user input.

The 'priority order determining module 1500' may refer to a module (e.g., including various circuitry and/or executable program instructions) that can determine the priority order between the plurality of intermediate answers. Specifically, the priority order determining module 1500 may determine which of the intermediate answers from among the plurality of intermediate answers to provide to the user, and determine an order for providing the plurality of intermediate answers to the user.

According to various embodiments, the processor 120 may determine, based on a similarity between the plurality of intermediate answers and the plurality of preferred answers, the priority order of the plurality of intermediate answers. The 'plurality of preferred answers' may refer to the intermediate answers selected by the user, and may be stored in the memory 110 as a type of information on the user preference.

For example, the processor 120 may input information on the plurality of intermediate answers obtained through the neural network model 1100 and information on the plurality of preferred answers stored in the memory 110 in the priority order determining module 1500, and determine the priority order of the plurality of intermediate answers.

For example, the priority order determining module 1500 may assign a high priority order to an intermediate answer with a high similarity with the plurality of preferred answers from among the plurality of intermediate answers, and assign a low priority order to an intermediate answer with a low similarity with the plurality of preferred answers from among the plurality of intermediate answers.

In another example, the priority order determining module 1500 may assign a high priority order to an intermediate answer similar with a preferred answer with a high number of selections by the user from among the plurality of intermediate answers, and assign a low priority order to an intermediate answer similar with the preferred answer with a low number of selections by the user from among the plurality of intermediate answers.

The similarity between the plurality of intermediate answers and the plurality of preferred answers may be identified based on a passage ranking, a cosine similarity, an edit distance, and the like.

The cosine similarity may refer to a method of measuring similarity based on an angle between vectors after converting the plurality of intermediate answers and the plurality of preferred answers respectively to vectors, and the edit distance may refer to a method of measuring similarity based on a number of minimum insertions, deletions, and substitute works necessary in changing the plurality of intermediate answers to the plurality of preferred answers. In addition, the passage ranking may measure the similarity between the plurality of intermediate answers and the plurality of preferred answers based on the cosine similarity or the edit distance, and measure the similarity using a process such as matching keywords between the plurality of intermediate answers and the plurality of preferred answers.

The processor 120 may identify at least one intermediate answer to be provided to the user from among the plurality of intermediate answers based on the determined priority order. Specifically, an upper limit value may be set to a number of intermediate answers to be provided to the user. For example, if a number of the plurality of intermediate answers is ten, and an upper limit value of the number of intermediate answers is three, the processor 120 may identify three intermediate answers with high priority orders from among the plurality of intermediate answers.

The processor 120 may provide the identified at least one intermediate answer and information on the priority order. For example, if three intermediate answers with a high priority order are identified from among the ten intermediate answers, the processor 120 may provide information on the priority orders of each of the three intermediate answers together with the three intermediate answers.

When displaying at least one intermediate answer on a display, the processor 120 may control the display to display a user interface that includes the at least one intermediate answer together with information on the priority order of each of the at least one intermediate answer. In addition thereto, the order in which the at least one intermediate answer is displayed within the user interface may indicate the information on the priority order.

According to various embodiments described above with reference to FIG. 4 above, the electronic device 100 may be able to provide an intermediate answer matching the preference of the user by determining the priority order between the plurality of intermediate answers based on the preference of the user.

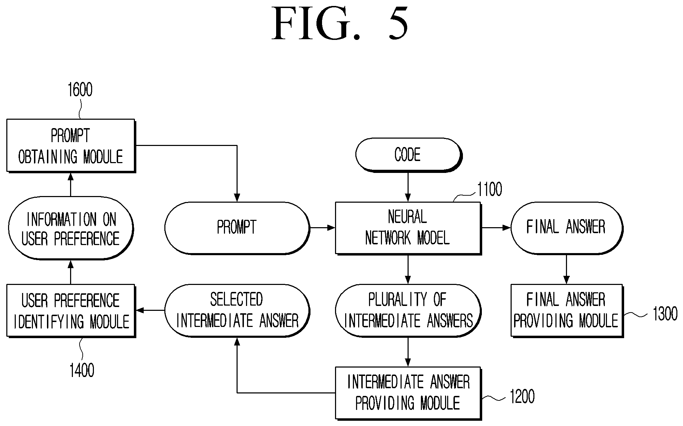

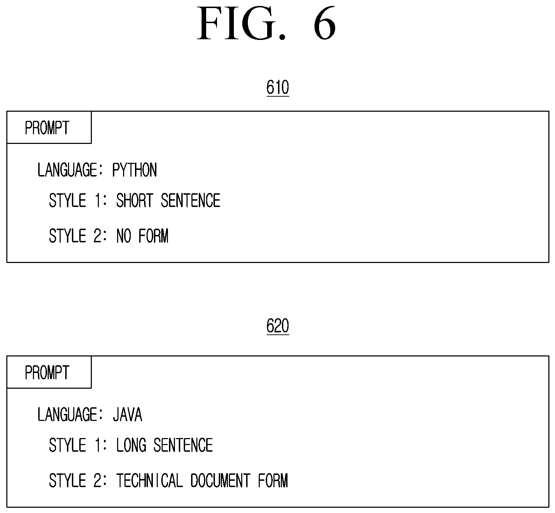

FIG. 5 is a diagram illustrating an example of obtaining a plurality of intermediate answers and a final answer by inputting a prompt together with a code in the neural network model 1100 according to various embodiments. FIG. 6 is a diagram illustrating an example prompt according to various embodiments. The disclosure will be described below with reference to FIG. 5 and FIG. 6.

As described above, the information on preference may be obtained based on the user input selecting one intermediate answer from among the plurality of intermediate answers, and updated based on the user input. Further, the information on preference may be used in obtaining a prompt. As shown in FIG. 5, to obtain the prompt, the plurality of modules may include not only the intermediate answer providing module 1200 and the final answer providing module 1300, but also the user preference identifying module 1400 and a prompt obtain module (e.g., including various circuitry and/or executable program instructions) 1600.

The 'prompt' may be a collective term for information for providing a guideline necessary when processing the code input. For example, the prompt may be a text indicating additional information for processing the input code, and may have the neural network model 1100 generate a more accurate output.

According to various embodiments, the processor 120 may obtain a prompt corresponding to the preference of the user based on the information on preference. For example, the processor 120 may obtain a prompt corresponding to the preference of the user using the prompt obtain module 1600.

The 'prompt obtain module 1600' may refer to a module including various circuitry and/or executable program instructions that can obtain a prompt corresponding to the preference of the user. For example, the prompt obtain module 1600 may identify the preference of the user based on the input code and the information on the user preference, and generate a prompt indicating the identified preference of the user. In addition, the prompt obtain module 1600 may include the intermediate answer selected by the user with respect to a code similar with the input code in the prompt. Whether the code is similar may be identified based on the cosine similarity, the edit distance, and the like as described above with reference to FIG. 4. In addition thereto, the processor 120 may have the user input the prompt directly by providing a user interface for inputting the prompt.

For example, as shown in 610 of FIG. 6, the prompt may indicate that the type of answer corresponding to the preference of the user is a short sentence and that it is a document without form. In another example, as shown in 620 of FIG. 6, the prompt may indicate that the type of answer corresponding to the preference of the user is a long sentence and that it is in a technical document form.

When the prompt is obtained, the processor 120 may input the code and the prompt in the neural network model 1100, and obtain the plurality of intermediate answers and the final answer. For example, when the prompt corresponding to the preference of the user is obtained through the prompt obtain module 1600, the processor 120 may input the prompt together with the code in the neural network model 1100, and obtain the plurality of intermediate answers and the final answer reflected with the preference of the user.

The preference of the user for the final answer that describes the code in the natural language may vary for each programming language. Accordingly, the processor 120 may obtain the prompt reflecting the preference of the user for the programming language of the input code.

For example, the processor 120 may identify the programming language of the input code. For example, the processor 120 may input to the code in a 'code classifying model' which is trained to distinguish a language of the code, and identify the programming language of the input code. The 'code classifying model' may be implemented as one neural network model 1100 in which the 'code describing model' and the 'code generating model' are integrated. The neural network model 1100 according to the disclosure may be implemented for each the programming language of the input code.

If the programming language of the input code is identified, the processor 120 may obtain the prompt based on information corresponding to the identified programming language from among the information on preference. For example, the processor 120 may identify the information corresponding to the identified programming language from among the information on preference, and obtain a prompt corresponding to the identified information.

For example, as shown in 610 of FIG. 6, the prompt may indicate that the programming language of the code is 'Python', and if the programming language is 'Python', the type of answer preferred by the user is a short sentence and that it is a document without form. In another example, as shown in 620 of FIG. 6, the prompt may indicate that the programming language of the code is 'Java', and if the programming language is 'Java', the type of answer preferred by the user is a long sentence and that it is a technical document form.

According to various embodiments described above with reference to FIG. 5 and FIG. 6, the electronic device 100 may provide the final answer reflected with the preference of the user by inputting the prompt indicating the preference of the user in the neural network model 1100 without performing a re-training with respect to the neural network model 1100 based on the information on the preference of the user. In addition, the electronic device 100 may provide the final answer differently reflecting the preferences of the user for each of the various programming languages.

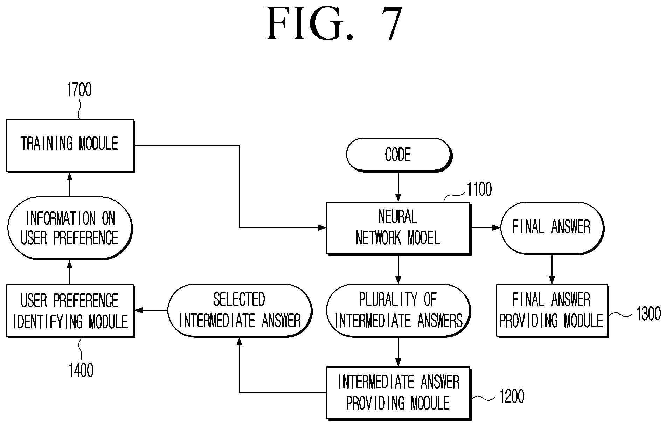

FIG. 7 is a diagram illustrating an example of training of the neural network model 1100 according to various embodiments.

As described above, the information on preference may be obtained based on the user input selecting one intermediate answer from among the plurality of intermediate answers, and updated based on the user input. Further, the information on preference may be used in the training of the neural network model 1100. As shown in FIG. 6, to train the neural network model 1100, the plurality of modules may include not only the intermediate answer providing module 1200 and the final answer providing module 1300, but also the user preference identifying module 1400 and a training module (e.g., including various circuitry and/or executable program instructions)1700.

According to various embodiments, the processor 120 may train the neural network model 1100 based on the information on preference. For example, the information on preference may be used as training data for the training of the neural network model 1100. For example, if the information on the preference of the user is obtained through the user preference identifying module 1400, the processor 120 may input the information on the preference of the user in the training module 1700, and the training module 1700 may train the neural network model 1100 based on a pre-set training method. For example, the 'training module 1700' may refer to a module that can train the neural network model 1100 based on the information on the preference of the user.

The training module 1700 may include various circuitry and/or executable program instructions, and train the neural network model 1100 based on a supervised learning method. For example, training of the neural network model 1100 may be performed according to a supervised learning method which uses the code and the information on the preference of the user as an input, and uses the final answer corresponding thereto as a label. In a loss used in the training of the neural network model 1100, various losses such as an L1 loss, an L2 loss, and a cross entropy loss may be used. In addition thereto, the training of the neural network model 1100 may also be performed based on various learning methods such as, for example, and without limitation, an unsupervised learning, a reinforcement learning, and the like.

The training of the neural network model 1100 may be referred to as a re-training or a fine-tuning of the neural network model 1100 in that it is a training that additionally reflects the information of the preference of the user while a pre-training of the neural network model 1100 had been completed.

For example, the training module 1700 may train the neural network model 1100 every time a section of the user for the plurality of intermediate answers is made, that is, every time the information of the preference of the user is updated. In another example, the training module 1700 may train the neural network model 1100 every time a number of updates of the information on the preference of the user is greater than or equal to a threshold number of times, or every time a pre-set cycle (e.g., one week) arrives.

In another example, the training module 1700 may train the neural network model 1100 to assign weight values to updated matters within a threshold period (e.g., three days) from among the information on the preference of the user to reflect the recent preference of the user.

According to various embodiments described above with reference to FIG. 7, the electronic device 100 may provide, by re-training the neural network model 1100 based on the information of the preference of the user, the intermediate answer and the final answer which are reflected with the preference of the user for the code that is to be input after re-training.

FIG. 8 is a block diagram illustrating an example configuration of the electronic device 100 according to various embodiments.

As shown in FIG. 8, the electronic device 100 according to various embodiments may further include, not only the memory 110 and the processor 120, but also a communicator (e.g., including communication circuitry) 130, an inputter (e.g., including input circuitry) 140, and an outputter (e.g., including output circuitry) 150. However, the configurations as shown in FIG. 1 and FIG. 8 are merely examples, and new configurations in addition to the configurations as shown in FIG. 1 and FIG. 8 may be included or a portion of the configurations may be omitted when implementing the disclosure.

The communicator 130 may include circuitry, and perform communication with an external device. For example, the processor 120 may receive various data or information from the external device connected through the communicator 130, and transmit various data or information to the external device.

The communicator 130 may include at least one from among a WiFi module, a Bluetooth module, a wireless communication module, an NFC module, and an ultra-wide band (UWB) module. Specifically, the WiFi module and the Bluetooth module may perform communication in a WiFi method and a Bluetooth method, respectively. When using the WiFi module or the Bluetooth module, various connection information such as a service set identifier (SSID) may first be transmitted and received, and may transmit and receive various information after communicatively connecting using the same.

In addition, the wireless communication module may perform communication according to various communication standards such as, for example, and without limitation, IEEE, ZigBee, 3rd generation (3G), 3rd generation partnership project (3GPP), long term evolution (LTE), 5th generation (5G) or the like. Further, the NFC module may perform communication in a near field communication (NFC) method using a 13.56 MHz band from among various radio-frequency identification (RFID) frequency bands such as, for example, and without limitation, 135 kHz, 13.56 MHz, 433 MHz, 860-960 MHz, 2.45 GHz, or the like. In addition, the UWB module may accurately measure, through communication between UWB antennas, a time of arrival (ToA) which is the time at which a pulse arrives at a target and an angle of arrival (AoA) which is a pulse angle of arrival of a transmitting device and accordingly, a precise distance and position recognition within an error range of tens of centimeters (cm) may be possible indoors.

For example, according to various embodiments, the processor 120 may obtain the code by receiving information on the code from the external device through the communicator 130. The processor 120 may control the communicator 130 to transmit information on the plurality of intermediate answers and information on the final answer to the external device. The processor 120 may receive the natural language input of the user for obtaining the code from the external device through the communicator 130. In addition thereto, the processor 120 may transmit and receive information on the neural network model 1100 and information on the plurality of modules from the external device through the communicator 130.

The inputter 140 may include circuitry, and the processor 120 may receive a user command for controlling an operation of the electronic device 100 through the inputter 140. For example, the inputter 140 may include configurations such as a microphone, a camera, a remote control signal receiver, and the like. The inputter 140 may be implemented in a form included in the display as a touch screen. For example, the microphone may receive a voice signal, and convert the received voice signal to an electric signal.

For example, according to various embodiments, the processor 120 may receive a user input of inputting the code through the inputter 140, the user input selecting one intermediate answer from among the plurality of intermediate answers, and the user input such as the natural language input of the user for obtaining the code.

The outputter 150 may include circuitry, and the processor 120 may output various functions that the electronic device 100 can perform through the outputter 150. The outputter 150 may include at least one from among the display, the speaker, and an indicator.

The display may output image data by a control of the processor 120. For example, the display may output an image pre-stored in the memory 110 by the control of the processor 120. For example, the display according to one or more embodiments of the disclosure may display a user interface (UI) that is stored the memory 110. The display may be implemented as a liquid crystal display (LCD) panel, organic light emitting diodes (OLED), and the like, and the display may also be implemented as a flexible display, a transparent display, and the like according to circumstance. However, the display according to the disclosure is not limited to a specific type.

The speaker may output audio data by the control of the processor 120. The indicator may be lit up by the control of the processor 120. For example, the indicator may be lit up in various colors according to the control of the processor 120. For example, the indicator may be implemented as light emitting diodes (LEDs), a liquid crystal display (LCD) panel, a vacuum fluorescent display (VFD), and the like, but is not limited thereto.

For example, according to various embodiments, the processor 120 may control the display to display the plurality of intermediate answers and/or the final answer. For example, the processor 120 may control the display to display a user interface including the plurality of intermediate answers and UI items for selecting one from among the plurality of intermediate answers. In addition, the processor 120 may control the speaker to output a voice corresponding to the plurality of intermediate answers and/or a voice corresponding to the final answer.

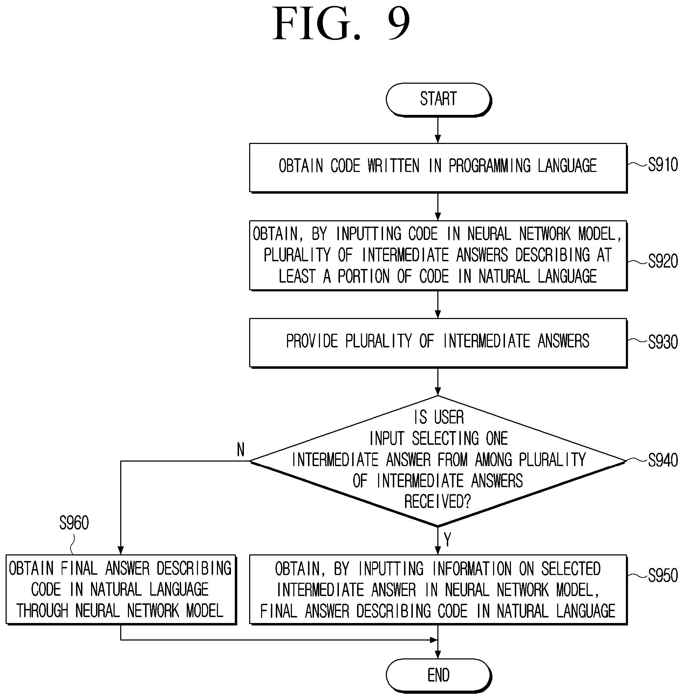

FIG. 9 is a flowchart illustrating an example method of controlling the electronic device 100 according to various embodiments.

As shown in FIG. 9, the code written in the programming language may be obtained (S910). For example, the electronic device 100 may obtain the code based on the user inputting the written code, and obtain the code by receiving information on the code from the external device.

The electronic device 100 may input the obtained code in the neural network model 1100, and obtain the plurality of intermediate answers describing at least a portion of the obtained code in the natural language (S920). The electronic device 100 may provide the obtained plurality of intermediate answers (S930).

For example, the electronic device 100 may obtain, at every pre-set time interval or every time a sentence is completed, each of the plurality of intermediate answers by showing an analysis result of the code generated until then in the natural language through the neural network model 1100, and provide the obtained plurality of intermediate answers every time each of the plurality of intermediate answers is obtained.

The electronic device 100 may receive the user input selecting one intermediate answer from among the plurality of intermediate answers (S940). The electronic device 100 may provide the plurality of intermediate answers to the user through the display of the electronic device 100, and also provide the plurality of intermediate answers to the user by transmitting information on the plurality of intermediate answers to the external device (e.g., terminal device of the user, etc.).

When the plurality of intermediate answers has been provided to the user through the display of the electronic device 100, the electronic device 100 may receive the user input selecting one intermediate answer from among the plurality of intermediate answers by the electronic device 100. When the plurality of intermediate answers has been provided to the user through the external device, the electronic device 100 may obtain information on the intermediate answer selected by the user by receiving the user input selecting one intermediate answer from among the plurality of intermediate answers from the external device.

If the user input is received (S940-Y), the electronic device 100 may input the information on the selected intermediate answer in the neural network model 1100, and obtain the final answer describing the code in the natural language (S950). For example, the neural network model 1100 may use the information on the intermediate answer selected by the user together with the input code, and obtain the final answer describing the code in the natural language.

For example, if the selected intermediate answer is a long sentence including a sentence greater than or equal to the threshold length, the electronic device 100 may obtain the final answer including long sentences through the neural network model 1100. If the selected intermediate answer is a short sentence including a sentence less than or equal to the threshold length, the electronic device 100 may obtain the final answer including short sentences through the neural network model 1100.

In another example, if the selected intermediate answer is an answer written according to a pre-defined form (e.g., a technical document form), the electronic device 100 may obtain the final answer written according to the pre-defined form through the neural network model 1100. If the selected intermediate answer is an answer that is not limited to the pre-defined form, the electronic device 100 may obtain the final answer that is not limited to the pre-defined form through the neural network model 1100.

If the user input is not received (S940-N), the electronic device 100 may obtain the final answer describing the code in the natural language through the neural network model 1100 (S960). For example, if the user input is not received within the pre-set threshold time, the neural network model 1100 may obtain the final answer describing the code in the natural language based on the input code without additional input.

If the user input selecting one intermediate answer from among the plurality of intermediate answers is received, the electronic device 100 may obtain the information on the preference of the user based on the information on the selected intermediate answer. The electronic device 100 may store the obtained information on the preference of the user in the memory 110. Because the information on preference can be used in determining the priority order of the plurality of intermediate answers, obtaining the prompt, training the neural network model 1100, and the like, descriptions on the above have been described above with reference to FIG. 4 to FIG. 7.

The method of controlling the electronic device 100 according to various example embodiments described above may be provided in the electronic device 100 implemented as a program. For example, the program that includes the controlling method of the electronic device 100 may be provided stored in a non-transitory computer-readable medium.

For example, in terms of a non-transitory computer-readable recording medium which includes programs for executing the controlling method of the electronic device 100, the controlling method of the electronic device 100 may include obtaining the code written in the programming language, obtaining, by inputting the code in the neural network model 1100, the plurality of intermediate answers describing at least a portion of the code in the natural language, providing the plurality of intermediate answers, and inputting, based on the user input selecting one intermediate answer from among the plurality of intermediate answers being received, information on the selected intermediate answer in the neural network model 1100, and obtaining the final answer describing the code in the natural language.

In the above, the controlling method of the electronic device 100, and the computer-readable recording medium that includes the program for executing the controlling method of the electronic device 100 have been briefly described, but this is merely to omit redundant descriptions thereof, and the various embodiments with respect to the electronic device 100 may be applicable to the controlling method of the electronic device 100, and to the computer-readable storage medium that includes the program for executing the controlling method of the electronic device 100.

Functions associated with artificial intelligence according to the disclosure may be operated through the processor 120 and the memory 110 of electronic device 100.

The processor 120 may be configured of one or a plurality of processors. At this time, the one or plurality of processors 120 may include a central processing unit (CPU), a graphic processing unit (GPU), and a neural processing unit (NPU), but is not limited to the example of the above-described processor 120.

The CPU may be a generic-purpose processor 120 which can perform not only general operations, but also artificial intelligence operations, and may efficiently execute complex programs through a multi-tiered cache structure. The CPU may be advantageous in a series processing method which allows for an organic connection between a previous calculation result and a following calculation result to be possible through a sequential calculation. The generic-purpose processor 120 may not be limited to the above-described example except for when specified as the above-described CPU.

The GPU may be a processor 120 for mass operations such as a floating point operation used in graphics processing, and perform a large-scale operation by integrating cores in mass in parallel. For example, the GPU may be advantageous in a parallel processing method such as a convolution operation compared to the CPU. In addition, the GPU may be used as a co-processor 120 for supplementing a function of the CPU. The processor 120 for mass operations may not be limited to the above-described example except for when specified as the above-described GPU.

The NPU may be a processor 120 which specializes in an artificial intelligence operation using an artificial neural network, and may implement each layer that forms the artificial neural network with hardware (e.g., silicon). Because the NPU is designed specialized according to a required specification of a company, there is a lower degree of freedom compared to the CPU or the GPU, but the NPU may efficiently process the artificial intelligence operation demanded by the company. As a processor 120 specializing in the artificial intelligence operation, the NPU may be implemented in various forms such as, for example, and without limitation, a tensor processing unit (TPU), an intelligence processing unit (IPU), a vision processing unit (VPU), and the like. The artificial intelligence processor 120 may not be limited to the above-described example except for when specified as the above-described NPU.

In addition, the one or the plurality of processors 120 may be implemented as a System on Chip (SoC). The SoC may be further included with the memory 110 in addition to the one or the plurality of processors 120, and a network interface such as a Bus for data communication between the processor 120 and the memory 110.

If the plurality of processors 120 is included in the System on Chip (SoC) included in the electronic device 100, the electronic device 100 may perform an operation associated with artificial intelligence (e.g., an operation associated with learning or inference of an artificial intelligence model) using a portion of the processors 120 from among the plurality of processors 120. For example, the electronic device 100 may perform an operation associated with artificial intelligence using at least one from among the GPU, the NPU, the VPU, the TPU, and a hardware accelerator specializing in artificial intelligence operations such as the convolution operation, and a matrix multiplication operation from among the plurality of processors 120. However, the above is merely an example embodiment, and operations associated with artificial intelligence may be processed using the generic-purpose processor 120 such as the CPU.

In addition, the electronic device 100 may perform an operation for a function associated with artificial intelligence using multicores (e.g., a dual core, a quad core, etc.) included in one processor 120. For example, the electronic device 100 may perform artificial intelligence operations such as the convolution operation, and the matrix multiplication operation in parallel using the multicores included in the at least one processor 120.

The one or the plurality of processors 120 may control to process input data according to a pre-defined operation rule or an artificial intelligence model stored in the memory 110. The pre-defined operation rule or the artificial intelligence model is characterized by being created through learning.

Being created through learning may refer, for example, to a pre-defined operation rule or an artificial intelligence model of a desired characteristic being created by applying a learning algorithm to a plurality of training data. The learning may be carried out in a device itself in which the artificial intelligence according to the disclosure is performed, or carried out through a separate server/system.

The artificial intelligence model may be configured of a plurality of neural network layers. At least one layer may have at least one weight value, and perform a layer operation through an operation result of a previous layer and at least one defined operation. Examples of the neural network may include a Convolutional Neural Network (CNN), a Deep Neural Network (DNN), a Recurrent Neural Network (RNN), a Restricted Boltzmann Machine (RBM), a Deep Belief Network (DBN), a Bidirectional Recurrent Deep Neural Network (BRDNN), a Deep-Q Networks, and a Transformer, and the neural network in the disclosure may not be limited to the above-described examples except for when specified.

The learning algorithm may be a method for training a predetermined target machine (e.g., robot) to make decisions or predictions on its own using the plurality of training data. Examples of the learning algorithm may include a supervised learning, an unsupervised learning, a semi-supervised learning, or a reinforcement learning, and the learning algorithm of the disclosure is not limited to the above-described examples unless otherwise specified.

The machine-readable storage medium may be provided in a form of a non-transitory storage medium. Herein, the 'non-transitory storage medium' merely refers to the storage medium being a tangible device, and not including a signal (e.g., electromagnetic waves), and the term does not differentiate data being semi-permanently stored or being temporarily stored in the storage medium. As an example, the 'non-transitory storage medium' may include a buffer in which data is temporarily stored.

According to various embodiments, the method according to various embodiments described in the disclosure may be provided included a computer program product. The computer program product may be exchanged between a seller and a purchaser as a commodity. The computer program product may be distributed in the form of the machine-readable storage medium (e.g., a compact disc read only memory (CD-ROM)), or distributed online (e.g., downloaded or uploaded) through an application store (e.g., PLAYSTORE^{™}) or directly between two user devices (e.g., smartphones). In the case of online distribution, at least a portion of the computer program product (e.g., downloadable app) may be stored at least temporarily in the storage medium such as a server of a manufacturer, a server of an application store, or a memory 110 of a relay server, or temporarily generated.

Each of the elements (e.g., a module or a program) according to the various embodiments of the disclosure as described above may be formed as a single entity or a plurality of entities, and a portion of sub-elements of the above-mentioned sub-elements may be omitted, or other sub-elements may be further included in the various embodiments. Alternatively or additionally, at least a portion of the elements (e.g., modules or programs) may be integrated into one entity to perform the same or similar functions performed by the respective elements prior to integration.

Operations performed by a module, a program, or another element, in accordance with various embodiments, may be executed sequentially, in a parallel, repetitively, or in a heuristic manner, or at least some operations may be executed in a different order, omitted or a different operation may be added.

The term "part" or "module" used in the disclosure may include a unit configured of a hardware, software, or firmware, or any combination thereof, and may be used interchangeably with terms such as, for example, and without limitation, logic, logic blocks, components, circuits, or the like. "Part" or "module" may be a component integrally formed or a minimum unit or a part of the component performing one or more functions. For example, a module may be configured as an application-specific integrated circuit (ASIC).

The various embodiments of the disclosure may be implemented with software including instructions stored in a machine-readable storage media (e.g., computer). The machine may call an instruction stored in the storage medium, and as a device operable according to the called instruction, may include an electronic device (e.g., electronic device 100) according to the above-mentioned embodiments.

Based on the instruction being executed by the processor, the processor may directly or using other elements under the control of the processor perform a function corresponding to the instruction. The instruction may include a code generated by a compiler or executed by an interpreter.

While the disclosure has been illustrated and described with reference to various example embodiments thereof, it will be understood that the various example embodiments are intended to be illustrative, not limiting. It will be understood by those skilled in the art that various changes in form and detail may be made therein without departing from the true spirit and full scope of the disclosure, including the appended claims and their equivalents. It will also be understood that any of the embodiment(s) described herein may be used in conjunction with any other embodiment(s) described herein.

## Claims

1. An electronic device, comprising:
a memory storing at least one instruction; and
at least one processor, comprising processing circuitry, individually and/or collectively, configured to execute at least one instruction,
wherein at least one processor, individually and/or collectively, is configured to:
input, based on a code written in a programming language being obtained, the code in a neural network model, and obtain a plurality of intermediate answers describing at least a portion of the code in a natural language,
provide the plurality of intermediate answers, and
input, based on an input selecting one intermediate answer from among the plurality of intermediate answers being received, information on the selected intermediate answer in the neural network model, and obtain a final answer describing the code in the natural language.

2. The electronic device of claim 1, wherein
at least one processor, individually and/or collectively, is configured to:
obtain, based on a natural language input for obtaining a code for performing a specific work being received, the code by inputting the natural language input in the neural network model.

3. The electronic device of claim 1,
wherein at least one processor, individually and/or collectively, is configured to:
obtain information on a preference of a user based on information on the selected intermediate answer, and
store the information on the preference of the user in the memory, and
wherein the information on the preference comprises at least one from among information on a plurality of preferred answers selected by the user, information on a sentence length of an answer preferred by the user, information on a form preferred by the user, and information on an answer style preferred by the user.

4. The electronic device of claim 3,
wherein at least one processor, individually and/or collectively, is configured to
update, based on the input being received, the information on the preference for the selected intermediate answer to be included in the information on the plurality of preferred answers.

5. The electronic device of claim 3,
wherein at least one processor, individually and/or collectively, is configured to:
determine, based on a similarity between the plurality of intermediate answers and the plurality of preferred answers, a priority order of the plurality of intermediate answers,
identify at least one intermediate answer to be provided to the user from among the plurality of intermediate answers based on the determined priority order, and
provide the identified at least one intermediate answer and information on the priority order.

6. The electronic device of claim 3,
wherein at least one processor, individually and/or collectively, is configured to:
train the neural network model based on the information on the preference.

7. The electronic device of claim 3,
wherein at least one processor, individually and/or collectively, is configured to:
obtain, based on the code being obtained, a prompt corresponding to the preference of the user based on the information on the preference, and
obtain, by inputting the code and the prompt in the neural network model, the plurality of intermediate answers and the final answer.

8. The electronic device of claim 7,
wherein at least one processor, individually and/or collectively, is configured to:
identify, based on the code being obtained, the programming language of the code, and
obtain the prompt based on information corresponding to the identified programming language from among the information on the preference.

9. A method of controlling an electronic device, the method comprising:
obtaining a code written in a programming language;
obtaining, by inputting the code in a neural network model, a plurality of intermediate answers describing at least a portion of the code in a natural language;
providing the plurality of intermediate answers; and
inputting, based on an input selecting one intermediate answer from among the plurality of intermediate answers being received, information on the selected intermediate answer in the neural network model, and obtaining a final answer describing the code in the natural language.

10. The method of claim 9, further comprising:
receiving a natural language input of a user for obtaining a code for performing a specific work; and
obtaining the code by inputting the natural language input in the neural network model.

11. The method of claim 9, further comprising:
obtaining information on a preference of a user based on information on the selected intermediate answer; and
storing the information on the preference of the user in a memory, and
wherein the information on the preference comprises at least one from among information on a plurality of preferred answers selected by the user, information on a sentence length of an answer preferred by the user, information on a form preferred by the user, and information on an answer style preferred by the user.

12. The method of claim 11, further comprising:
updating, based on the input being received, the information on the preference for the selected intermediate answer to be comprised in information on the plurality of preferred answers.

13. The method of claim 11, further comprising:
determining, based on a similarity between the plurality of intermediate answers and the plurality of preferred answers, a priority order of the plurality of intermediate answers;
identifying at least one intermediate answer to be provided to the user from among the plurality of intermediate answers based on the determined priority order; and
providing the identified at least one intermediate answer and information on the priority order.

14. The method of claim 11, further comprising:
training the neural network model based on the information on the preference.

15. The method of claim 11, further comprising:
obtaining, based on the code being obtained, a prompt corresponding to the preference of the user based on the information on the preference; and
obtaining, by inputting the code and the prompt in the neural network model, the plurality of intermediate answers and the final answer.
